**Europäisches Patentamt**

(19) **European Patent Office**

**Office européen des brevets**

(11) Veröffentlichungsnummer: **0 128 583**

**B1**

(12) **EUROPÄISCHE PATENTSCHRIFT**

(45) Veröffentlichungstag der Patentschrift:
14.12.88

(51) Int. Cl.⁴: **B 60 K 41/20**

(21) Anmeldenummer: **84106739.0**

(22) Anmeldetag: **13.06.84**

(54) **Fahrzeug mit Vierredantrieb.**

(30) Priorität: **14.06.83 DE 3321377**

(43) Veröffentlichungstag der Anmeldung:
**19.12.84 Patentblatt 84/51**

(45) Bekanntmachung des Hinweises auf die Patenterteilung:
**14.12.88 Patentblatt 88/50**

(84) Benannte Vertragsstaaten:
**DE FR GB SE**

(56) Entgegenhaltungen:
**EP-A-0 064 669**
**DE-A-3 117 105**
**FR-A-2 509 242**
**FR-A-2 514 706**
**GB-A-2 020 382**
**GB-A-2 109 882**
**US-A-4 258 958**

**Robert Bosch GmbH; Kraftfahrttechnisches Taschenbuch, 18. Auflage 1976, VDI Verlag Düsseldorf, Seite 318**

(73) Patentinhaber: **ROBERT BOSCH GMBH, Postfach 50, D-7000 Stuttgart 1 (DE)**

(72) Erfinder: **Leiber, Heinz, Ing. grad., Theodor- Heuss-Strasse 34, D-7141 Oberriexingen (DE)**

(74) Vertreter: **Kammer, Arno, Dipl.- Ing., ROBERT BOSCH GmbH Zentralabteilung Patente Postfach 50, D-7000 Stuttgart 1 (DE)**

LIBER, STOCKHOLM 1988

**Beschreibung**

Die Erfindung betrifft ein Fahrzeug mit Vierradantrieb mit den Merkmalen des Oberbegriffs des Anspruches 1.

Ein Fahrzeug mit Vierradantrieb und den genannten Merkmalen ist aus der US-A-4 258 958 bekannt.

Außerdem sind Fahrzeuge bekannt (sh. z. B. Bosch Kraftfahrtechnisches Taschenbuch, 18. Auflage, Seite 318 und 319), bei denen Anfahrschwierigkeiten bei kleinem μ an einem Rad dadurch vermieden werden, daß Ausgleichsgetriebe mit einer Sperre zum Einsatz kommen, wodurch wenigstens die Hinterräder und die beiden Antriebswellen praktisch starr miteinander verbunden werden.

Bei solchen Sperren können kritische Fahrzustände beim Bremsen auftreten, so daß sich das Fahrzeug schlechter fahren läßt. Probleme können sich beim Einbau eines Antiblockierregelsystems ergeben.

Bei der Ausrüstung des Fahrzeugs gemäß den Merkmalen des Patentanspruchs 1 erreicht man hinsichtlich des Anfahrens die gleiche Wirkung wie durch die genannten Sperren, man hat aber den Vorteil besserer Fahreigenschaften, z. B. der Traktion. Alle Räder werden auf optimalen Antriebsschlupf geregelt und ermöglichen damit gute Seitenführung. Auch an den Vorderrädern wird eine maximale Traktion erzielt. Außerdem ist nun der Einsatz von Antiblockierreglern unproblematisch.

Eine Antriebsschlupfregelung der angetriebenen Räder vorzunehmen ist an sich bekannt; die Erfindung liegt in der Schaffung einer elektronischen Alternative für die Differenzialsperren.

Die Antriebsschlupfregelung wird in bekannter Weise durchgeführt. Vorzugsweise wird aus den Signalen aller Geber eine der Fahrzeuggeschwindigkeit angenäherte Bezugsgröße gebildet, deren Größe vorteilhafter Weise von den Gebern der an einer Wagenseite liegenden Räder bestimmt wird und die Geschwindigkeitserhöhungen nur verzögert erfolgen.

Man wird günstigerweise die Bremsung zum Zweck der Vermeidung des Durchdrehens nur bis zu einer vorgegebenen Grenzgeschwindigkeit vornehmen, also bei einer höheren Geschwindigkeit die Beeinflussung sperren oder abschalten. Darüberhinaus wird das Durchdrehen nur durch die Beeinflußung des Motormomentes z. B. durch Steuerung der Drosselklappe vorgenommen.

Anhand der Zeichnung werden Ausführungsbeispiele der Erfindug näher erläutert. Es zeigen:

Fig. 1       ein Ausführungsbeispiel
Fig. 2 und 3       Lösungen für das Bremssystem 10 der Fig. 1
Fig. 4       eine Detaildarstellung des Blocks 6 der Fig. 1.

Die Zeichnung zeigt ein Vierradfahrzeug, dessen Räder 1a - 1d alle angetrieben werden. Das vom Motor 2 über ein Getriebe 3 abgegebene Moment wird über ein Ausgleichsgetriebe 3a auf die Antriebswellen 4a und 5a und über weitere Ausgleichsgetriebe 4 und 5 auf die Räder 1a - 1d geleitet. Allen Rädern sind Geschwindigkeitsgeber 1a' - 1d' zugeordnet, die mit einer Regeleinrichtung 6 verbunden sind. Diese erkennt ein durchdrehendes bzw. durchdrehende Räder und beeinflußt Ventile im Block 7. Eine Bremsdrucksteuereinrichtung 10 enthält eine Druckquelle. Über die Ventile im Block 7 kann damit getrennt Druck an den einzelnen Radbremsen über die Leitungen 8 eingespeist werden. Es kann somit durch die Bremsdruckeinsteuerung das Durchdrehen der einzelnen Räder verhindert werden. Drehen alle Räder durch, so wird über eine Wirkverbindung 9 von der Regeleinrichtung 6 das Motordrehmoment z. B. durch Verstellen der Drosselklappe zusätzlich verringert.

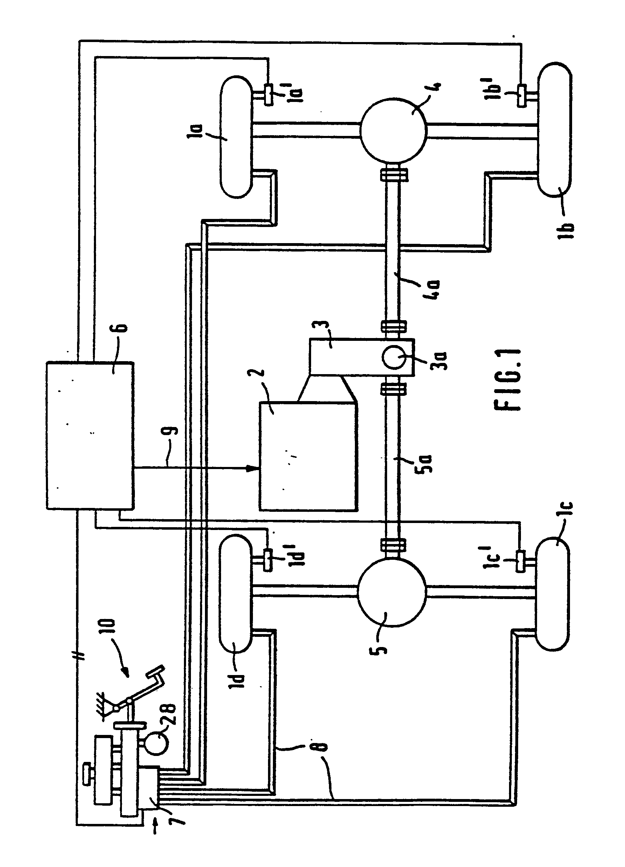

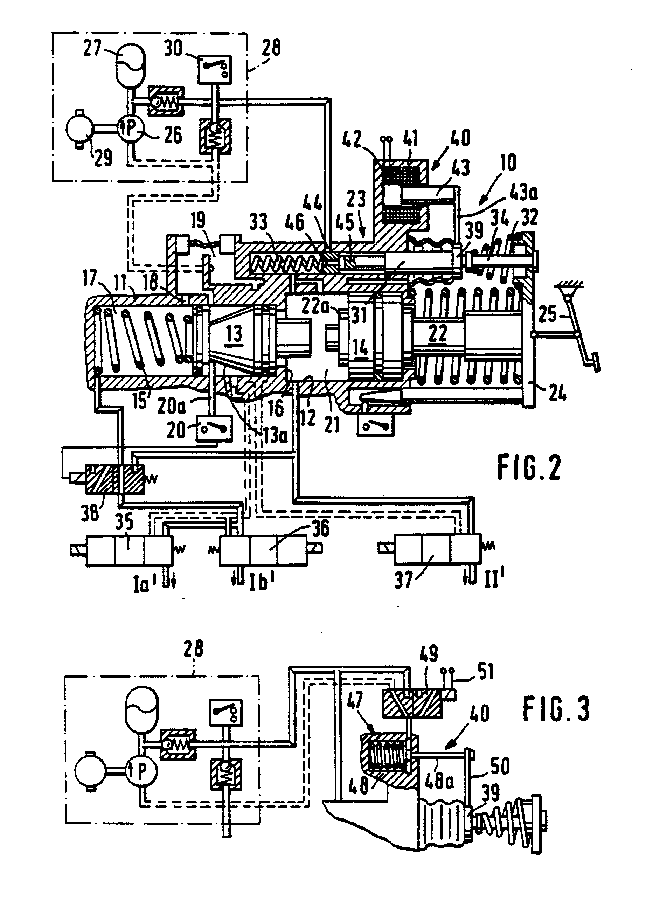

Mögliche und bevorzugte Aufbauten der Einrichtung 10 der Fig. 1 werden anhand der Fig. 2 und 3 erläutert.

In Fig. 2 umfaßt sie einen hydraulischen Zweikreis-Tandem-Hauptbremszylider mit einem Gehäuse 11 und mit einem abgestuften Zylinder 12, in dem hintereinander zwei Kolben 13 und 14 angeordnet sind. Der vordere Kolben 13 liegt unter der Kraft einer Rückführfeder 15 an einer im Zylinder gebildeten Schulter 16 an und begrenzt eine Arbeitskammer 17, an die ein erster Bremskreis I angeschlossen ist. In der dargestellten Ausgangslage des Kolbens 13 hat dieser über einen Gehäusekanal 18 Verbindung mit einem Nachfüllbehälter 19. Dieser vordere Teilbereich des Hauptbremszylinders bildet somit einen geschlossenen Bremskreis, wobei der Kolben 13 zwischen zwei Laufflächen eine Schrägfläche 13a aufweist, an der ein Stößel 20a eines Schalters 20 entlangläuft.

Der hinter dem vorderen Kolben 13 angeordnete zweite Kolben 14 läuft innerhalb der größeren Abstufung des Zylinders 12 und begrenzt eine Kammer 21, an die dann beispielsweise ein zweiter Bremskreis II angeschlossen ist. Die wirksame, die Reaktion der Druckkräfte übernehmende Fläche des als Ringkolben ausgebildeten Kolbens 14 wird durch eine Stirnfläche 22a eines ihn durchdringenden Pedalstößels 22 ergänzt. Der Pedalstössel 22 ist zusammen mit einem Steuerventil 23 über eine Pedalplatte 24 betätigbar, die am Bremspedal 25 angelenkt ist. Das Steuerventil ist so ausgebildet, daß es in seinen beiden möglichen Endstellungen die Kammer 21 entweder mit einer Entlastungsstelle (Nachfüllbehälter 19) oder mit einer aus Pumpe 26 und Speicher 27 bestehenden Druckmittelquelle 28 verbindet. Die Druckmittelquelle wird vervollständigt durch einen Motor 29 zum Antrieb der Pumpe 26 und durch einen auf den noch vorhandenen Speicherdruck reagierenden Schalter 30 zur Ansteuerung des Motors.

An dieser Stelle sei darauf hingewiesen, daß Aufbau und die im folgenden noch zu beschreibende Wirkungsweise des in Fig. 2 dargestellten Tandem-Zweikreis-Hauptbremszylinders nur beispielhaft angegeben ist zum besseren Verständnis der Ausbildung eines Stellglieds, welches am Steuerventil angreift.

Das Steuerventil 23 hat einen Steuerschieber 31, der über eine Wegfeder 32 von der Pedalplatte 24 betätigbar ist. Durch die verhältnismäßig langen Schieberflächen des Steuerschiebers kann auch bei Ausfall der Energieversorgung der volle Pedalweg zur Betätigung des vom Pedalstößel 22 beispielsweise nach anfänglich freier Bewegung später über eine nicht dargestellte Kupplungsvorrichtung mitgenommenen Ringkolbens 14 benutzt werden.

Eine Vorspannungsfeder 33 drückt den Steuerschieber 31 in der Zeichenebene nach rechts in seine Ausgangsposition in Anlage an einen unter der Wirkung der Wegfeder 32 stehenden Druckstößel 34 an der Pedalplatte 24.

Durch in die Bremsleitungen zu den Radbremszylindern geschaltete, beispielsweise als 3/3-Wege-Magnetventile ausgebildete Bremsdruck-Steuerelemente 35, 36, 37 können der Bremsanlage noch ABS-Steuerfunktionen (Antiblockierschutz) aufgeschaltet werden.

Am Betätigungsendpunkt 39 des Steuerschiebers 31 des Steuerventils 23 greift ein willkürlich betätigbares Stellglied 40 an, welches bei dem in Fig. 2 dargestellten Ausführungsbeispiel ein als Zugmagnet ausgebildeter Elektromagnet 41 ist. Der Elektromagnet 41 besteht aus Wicklung 42 und Anker 43, der bei Ansteuerung der Wicklung mit einem Strom beliebiger Form, Amplitude und Taktung in entsprechender Weise in das Wicklungsinnere hineingezogen wird und über einen in diesem Fall erforderlichen, am Anker und am Angriffspunkt 39 festgemachten Querhebel 43 unter Betätigung des Steuerventils 23 dessen Steuerschieber 31 mitnimmt.

Es ergibt sich dann folgende Wirkungsweise insgesamt. Der Steuerschieber 31 läßt sich entweder über den Druckstößel 34 von der Pedalplatte 24 aus oder bei Abheben vom Druckstößel 34 auch bei nichtbetätigtem Bremspedal 25 durch Ansteuerung des Stellglieds 40, in Fig. 1 mit elektrischen Signalen, aus der Ausgangsposition nach links verschieben. Dadurch wird von der Energieversorgung 28 über einen Druckeinlaß 44 am Steuerventil 23, einer Ringausnehmung 45 und einer zentralen Durchtrittsbohrung 46 am Steuerschieber 31 der Druck der Hilfsenergie in die Druckkammer 21 und von dort zunächst in den Bremskreis II geleitet. Durch entsprechende Einwirkung des eingesteuerten Drucks auf den Kolben 13 wird ein Druck in der Kammer 17 erzeugt, der als Bremsdruck im Bremskreis I wirksam ist. Es kann also ohne Bremsbetätigung mittels des Stellglieds 40 und Betätigung der Ventile 35 - 37 Druck an die einzelnen Bremsen zur Antriebsschlupfregelung eingesteuert werden.

Beim Ausführungsbeispiel der Fig. 3 ist unterschiedlich, daß das Stellglied 40 als hydraulischer Arbeitszylinder 47 ausgebildet ist, dessen Stellkolben 48 unter dem von einem vorgeschalteten Magnetventil 49 angesteuerten Druck eine Verschiebebewegung durchführt und über seine Kolbenstange 48a mit an dieser und am Angriffspunkt 39 für den Steuerschieber festgemachten Querhebel 50 den Steuerschieber zur Betätigung des Steuerventils mitnimmt. Die Ansteuerung des Magnetventils 49 erfolgt auch hier wieder durch Zuführung elektrischer Signale, wie bei 51 angedeutet; die Betätigung des Bremsventils erfolgt indirekt über den Stellkolben.

Durch die Zuführung von gegebenenfalls entsprechend ausgebildeten elektrischen Signalen, getaktet und mit verschiedenen Strompegeln mit zeitlicher Veränderung zur Realisierung entsprechender Zeit-Strom-Funktionen ergeben sich vorteilhafte Möglichkeiten für die Druckeinspeisung bei Bremsventilen zur Realisierung von Antriebsschlupfregelungen.

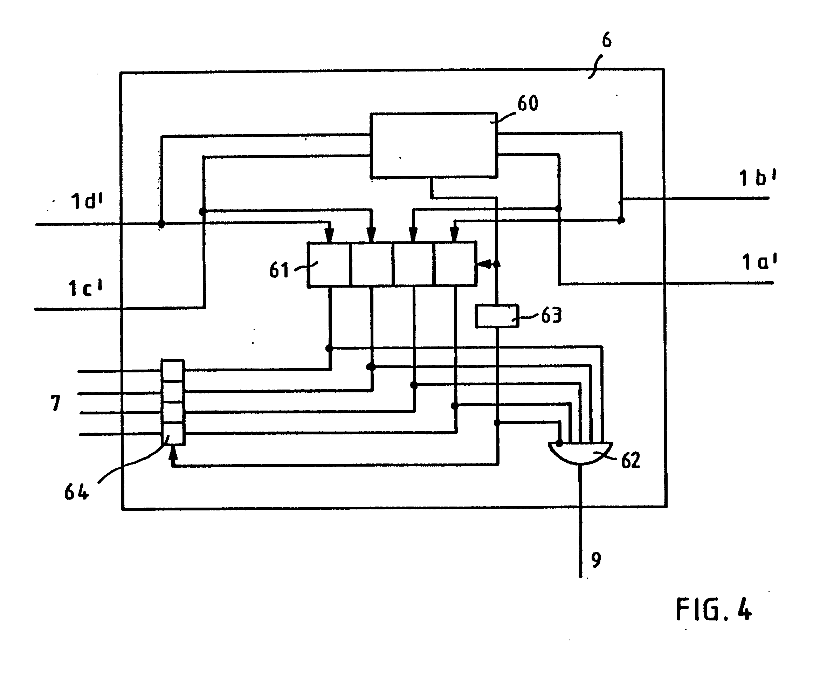

In Fig. 4 ist die Regeleinrichtung 6 der Fig 1 im Detail dargestellt. Die vier Leitungen, die von den Meßwertgebern 1a' - 1d' kommen, führen zu einem Block 60, in dem ein Referenzsignal erzeugt wird, das der Fahrzeuggeschwindigkeit angenähert ist. Dies wird in bekannter Weise dadurch erreicht, daß sich das Referenzsignal mit vorgegebener Steigung und damit beim Durchdrehen der Räder verzögert den sich vergrößernden Radgeschwindigkeiten anpaßt. Das Referenzsignal wird Vergleichern 61 zugeführt, in denen die Signale der Meßwertgeber mit diesem Referenzsignal verglichen werden und in denen Steuersignale für die Ventile 7 bzw. 35 - 37 erzeugt werden. Diese Steuersignale werden auch einem Und-Gatter 62 zugeführt, das seinerseits ein weiteres Steuersignal erzeugt, wenn alle Steuersignale vorhanden sind. Dieses weitere Steuersignal wird über Leitung 9 dem Motor 2 zur Verkleinerung des Motormoments zugeführt. Sowohl die Steuersignale für die Ventile 7 als auch das für den Motor 2 werden unterdrückt, wenn die Fahrzeuggeschwindigkeit über einer vorgegebenen Größe liegt. Dies wird mit Hilfe eines Blocks 63 erreicht, der ein Sperrsignal erzeugt, wenn diese Größe überschritten wird. Das Sperrsignal sperrt das Und-Gatter 62 und Tore 64 in den Leitungen zu den Ventilen.

**Patentansprüche**

1. Fahrzeug mit Vierradantrieb, bei dem die beiden Räder je einer Achse über je ein Ausgleichsgetriebe angetrieben werden, wobei diese beiden Ausgleichsgetriebe über Antriebswellen mit einem Verteilergetriebe verbunden sind, das vom Antriebsmotor angetrieben wird, und bei dem eine eine Druckquelle enthaltende Bremsdrucksteuereinrichtung vorgesehen ist, mit der durchdrehende Räder beeinflußbar sind, dadurch gekennzeichnet, daß den Rädern (1a - 1d) Meßwertgeber (1a' - 1d') zur Überwachung der Radgeschwindigkeit zugeordnet sind, daß diese mit einer Regeleinrichtung (6) verbunden sind und daß die Bremsdrucksteuereinrichtung (10) von der Regeleinrichtung (6) dann im Sinne einer Bremsung eines oder mehrerer Räder angesteuert wird, wenn dieses Rad oder diese Räder im Vergleich zu den anderen Rädern durchdreht bzw. durchdrehen, und daß zwischen der Regeleinrichtung (6) und einem das Motordrehmoment beeinflussenden Glied eine Wirkverbindung (9) besteht zwecks Erniedrigung des Motordrehmoments, wenn auch das letzte der Räder (1a - 1d) durchdreht.

2. Fahrzeug nach Anspruch 1, dadurch gekennzeichnet, daß die Regeleinrichtung (6) eine Einrichtung zur Bildung einer der Fahrzeuggeschwindigkeit angenäherten Bezugsgröße aus den Signalen der Meßwertgeber (1a' - 4a') enthält, deren Größe vorzugsweise von den Gebern der auf einer Wagenseite liegenden Räder bestimmt wird und daß die Geschwindigkeitserhöhungen nur mit einer vorgegebenen Verzögerung erfolgen.

3. Fahrzeug nach Anspruch 1 oder 2, dadurch gekennzeichnet, daß die Bremsung und gegebenenfalls die Beeinflussung des Motordrehmoments durch die Regeleinrichtung nur bis zu einer vorgegebenen Grenzgeschwindigkeit erfolgt.

## Claims

1. Four-wheel drive vehicle, in which the two wheels of an axle are in each case driven by a differential gear, these two differential gears being connected via drive shafts to a transfer case which is driven by the drive engine, and in which a brake pressure control device including a pressure source is provided, by which spinning wheels can be influenced, characterized in that the wheels (1a - 1d) are assigned sensors ( 1a'- 1d' ) for monitoring the wheel speed, in that these sensors are connected to a control device (6) and in that the brake pressure control device (10) is then activated by the control device (6) in the sense of a braking of one or more wheels when this wheel spins or these wheels spin in comparison with the other wheels, and in that there is an operative connection (9) between the control device (6) and a member influencing the engine torque for the purpose of lovering the engine torque when the last of the wheels (1a - 1d) also spins.

2. Vehicle according to claim 1, characterized in that the control device (6) includes a device for forming from the signals of the sensors ( 1a'- 4a' ) a reference variable which approximates the vehicle speed and the size of which is preferably determined by the sensors of the wheels on one side of the vehicle and in that the speed increases only take place with a given delay.

3. Vehicle according to claim 1 or 2, characterized in that the braking and, if appropriate, the influencing of the engine torque by the control device only take place up to a given limit speed.

## Revendications

1. Véhicule à quatre roues motrices, pour lequel les deux roues de chacun des essieux sont entraînées chaque fois par un différentiel, ces deux différentiels étant reliés à cette occasion par une boîte de répartition, qui est entraînée par le moteur d'entraînement et pour lequel est prévu un dispositif de commande de pression de freinage qui contient une source de pression, avec lequel on peut influer sur des roues qui patinent, caractérisé en ce que des capteurs de mesure (1a' à 1d') sont affectés aux roues (1a à 1d), pour le contrôle de la vitesse de roue, que ceux-ci sont reliés à un dispositif de régulation (6), et que le dispositif de commande de pression de freinage (10) est commandé par le dispositif de régulation (6), au sens d'un freinage d'une, ou bien de plusieurs roues, si cette roue patine, ou bien ces roues patinent, en comparaison des autres roues, et qu'il existe une liaison active (9), entre le dispositif de régulation (6) et un organe influant sur le couple moteur, pour diminuer le couple moteur, si également la dernière des roues (1a à 1d) se met à patiner.

2. Véhicule selon la revendication 1, caractérisé en ce que le dispositif de régulation (6) contient un dispositif pour la formation d'une grandeur de référence, approchée de la vitesse du véhicule, à partir des signaux des capteurs de mesure (1a' à 4a'), dont la valeur est avantageusement déterminée par les capteurs des roues se situant sur un côté de la voiture et que les élévations de vitesse ne s'ensuivent qu'avec un décalage prédéterminé.

3. Véhicule selon la revendication 1 ou 2, caractérisé en ce que le freinage et, le cas échéant, l'influence exercée sur le couple moteur, par le dispositif de régulateur, ne s'effectuent que jusqu'à une vitesse limite prédéterminée.

FIG.1

0 128 583

FIG.2

FIG.3

3

FIG. 4